# EUROPEAN PATENT SPECIFICATION

(11) **EP 1 284 430 B1**
(45) Date of publication and mention of the grant of the patent: **26.04.2006**
(21) Application number: 02254780.6
(22) Date of filing: 09.07.2002
(51) Int. Cl.: G02B 6/43, H04B 10/00, H04J 14/02, H04B 10/10

(54) **Method and apparatus for interconnecting processors by WDM**
Verfahren und Vorrichtung zum Verbinden von Prozessoren mit WDM
Méthode et appareil pour l'interconnexion de processeurs par WDM

(30) Priority: 17.08.2001 US 932705
(43) Date of publication of application: 19.02.2003
(73) Proprietor: LUCENT TECHNOLOGIES INC., Murray Hill, New Jersey 07974-0636 (US)
(72) Inventor: Byers, Charles Calvin, DuPage, Illinois 60187 (US); Hatcher, Daniel Raymond, Clinton, New Jersey 08809 (US)
(74) Representative: Sarup, David Alexander

(56) References cited:
- EP-A- 0 811 862
- EP-A- 0 876 019
- GB-A- 2 334 396
- L'ONDE ELECTRIQUE, vol. 70, no. 6, 11 December 1990 (1990-12-11), pages 27-31,
- PROCEEDINGS OF THE IEEE, vol. 72, no. 7, July 1984 (1984-07), pages 850-866,
- APPLIED OPTICS, vol. 35, no. 32, November 1996 (1996-11), pages 6354-6364,
- IEEE PHOTONICS TECHNOLOGY LETTERS, vol. 5, no. 7, July 1993 (1993-07), pages 825-828,
- ELECTRONICS LETTERS, vol. 30, no. 6, August 1994 (1994-08), pages 1323-1324,

## Description

### Field of the Invention

This invention relates to the field of stored program controlled systems, including, but not limited to, telephone switching offices, data routers, and robotic machine tools; and, more specifically, this invention describes an optical communication path interconnect to provide communications for component processing units of the stored program controlled systems, wherein data is carried on the optical communication path using wavelength division multiplexing.

### Background of the Invention

Co-pending European application EP 1. 284. 429 discloses a system for interconnecting processing units of a stored program controlled system using free space optics. According to this disclosure, an optical beam line carries signals among the various processing units. Multiple distinct streams of data are communicated within that system. When multiple distinct communication streams within a system or network share the same physical media, a multiplexing and Media Access Control (MAC) protocol is necessary for optimal system operation. These protocols help insure that the system performs at the desired capacity, performance and reliability levels.

One important function of any multiplexing and MAC protocol is to divide the limited capacity of the shared physical communication channel among the various logical streams or subchannels that share it. This subdivision of the shared physical channel provides capacity guarantees, so that each of the logical channels has an equal portion of the available capacity, or a pre-arranged larger or smaller proportion of this capacity. Pre-allocation of capacity provides a guaranteed level of capacity to all users. Such pre-allocation is often wasteful of system capacity because, if a given subchannel has no traffic to send, other sub-channels may have more traffic than they can handle.

Other multiplexing and MAC protocols provide statistical multiplexing of the system's capacity, wherein all potential transmitters on the shared channel negotiate for an opportunity to transmit. The theoretical maximum load offered, if all transmitters are operating at full rate, often exceeded the capacity of the shared media, which requires various buffering, queuing and priority techniques to govern when each transmitter operates. This system has potential channel utilization efficiency advantages, at the expense of making it more difficult to guarantee a minimum individual subchannel capacity.

Another important function of any multiplexing and MAC protocol is to direct or route a given channel's traffic to the intended receiver over the shared medium. Channels in an optical system are often statically mapped using separate wavelengths (or similar separators as known in the art), and the receiver is determined by the wavelength assigned to the transmitter. In other cases, traffic is offered to the shared medium as packets. These packets contain a destination address, which is used by switching or routing functions to complete the connections.

The concept of priority is also important to multiplexing and MAC protocols. Some messages have a higher priority than others, based upon the importance or time sensitivity of their contents. The multiplexing and MAC protocol must take priority into account as it manages access to the shared medium.

Security is often an intrinsic function of multiplexing and MAC protocols. If there is a hazard associated with un-authorized listeners interception of a messages over the shared medium, the protocol can take steps to eliminate (or at least greatly reduce the impact of) this hazard. One means for heightened security is physically separating sensitive traffic from all other traffic in the various parallel sub-media in the transmission medium. A more common approach is to use some form of encryption at the transmitter, and decryption at only the authorized receiver(s).

A further function that multiplexing and MAC protocols provide is fault tolerance and fault recovery. If a failure occurs that disables the shared media or significantly reduces its capacity, the protocol invokes various diagnostic actions to discover the source of the problem and then appropriate recovery actions to attempt to correct the source of the problem. Often, the fault recovery operation involves switching the traffic to a redundant medium or attempting to shed load so only the highest priority traffic is allowed on the remaining capacity.

One form of multiplexing and MAC protocols usable in a free space optical beam line medium is wavelength division multiplexing. In a Wavelength Division Multiplexed (WDM) system, the shared medium is divided into a set of simultaneously-transmitted wavelengths. All subchannels sharing the medium are assigned specific wavelengths on which to carry traffic. The number of different wavelengths assigned may be equal for all subchannels, or some subchannels may be given higher capacity by assigning them a higher proportion of wavelengths available on the beam line on which to transmit.

Therefore, there is a need in the art to provide a free space optical interconnect between units of a stored program controlled system using a wavelength division multiplex system.

EP-A-0 876 019 discloses a free-space wavelength division multiplexing system having a demultiplexer and receiver arrangement which may be based on a rotatable interference filter. A desired wavelength can be selected by adjusting the angle of the interference filter with respect to the incoming light beam. Alternatively, the demultiplexer and receiver arrangement may be based on a diffraction grating. Multiple wavelengths of light are diffracted at different angles, which spatially separates each wavelength in the system. A corresponding multiple-element linear photodetector array is used to receive the spatially separated optical signals.

### Summary of the Invention

A method and system according to the invention are as set out in the independent claims. Preferred forms are set out in the dependent claims.

This need is satisfied and a technical advance is achieved in the art by a system and method that provides wavelength division multiplexing in a system that uses free space optics to interconnect processing units of a stored program controlled system. The system of this invention uses Wavelength Division Multiplexing (WDM) techniques to provide a plurality of logically independent subchannels over a single shared free space optical beam line. The single logical beam is divided among the subchannels, with each subchannel operating on a selected wavelength or wavelengths.

In static WDM mapping, wavelengths are assigned to subchannels when the system is configured, and each processing unit using the beam line has a predetermined wavelength or wavelengths for communication with other processing units. The wavelength assignment may also be determined as the processing units are installed by selecting a laser of an individually designated wavelength at each transmit probe and a wavelength selective filter optical element at each receive probe. An alternate embodiment, dynamic mapping, uses frequency agile lasers and tunable filters at the receive probes to dynamically assign wavelengths to the various subchannels. Dynamic assignment has advantages in versatility, and reliability, but at the cost of more complex hardware.

### Brief Description of the Drawings

A more complete understanding of this invention may be obtained from a consideration of the specification taken in conjunction with the drawings, in which:
FIG. 1 is a perspective view of a beam line illustrating the relationship of the beam line and probes according to a general overview of an exemplary embodiment of this invention;
FIG. 2 is a cross-sectional view of the beam line taken along line 2-2 of FIG.1;
FIG. 3 is an exemplary embodiment of transmitting and receiving probes of FIGs. 1 and 2;
FIG. 4 is a block diagram of a hub of the beam line of FIG.'s 1 and 2 according to an exemplary embodiment of this invention;
FIG. 5 is a representative wavelength spectrum of the beam line of FIG. 1 operating at full capacity; and
FIG. 6 is a flowchart of processing for bandwidth management tasks of increasing and decreasing the capacity of each subchannel.

### Detailed Description

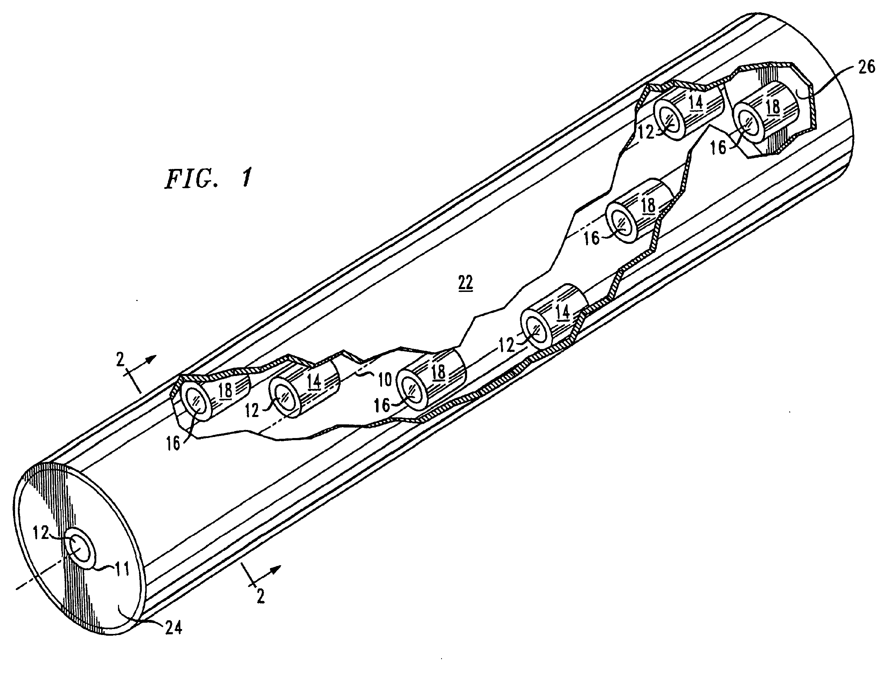

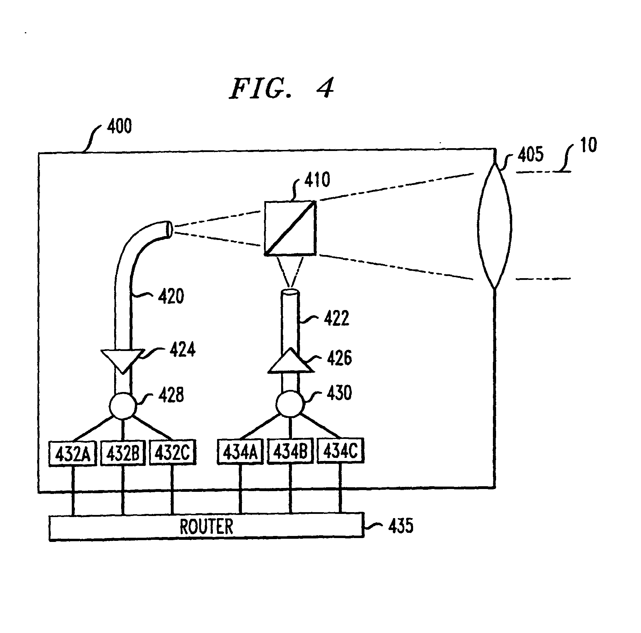

Turning to FIG. 1, a perspective view of a free space beam line 10 according to an exemplary embodiment of this invention is shown. According to this exemplary embodiment, a free space beam line 10 is generated at hub 11 which projects optically encoded signals, as will be described below in connection with FIG. 4

A plurality of transmitters 12 within transmitting probes 14 and receivers 16 within receiving probes 18 are distributed throughout beam line 10 along the outer periphery in the form of a spiral or helix, so that there is a minimal amount of shadowing; that is, one probe being in the shadow of a previous probe in beam line 10, inhibiting the probe in the shadow from transmitting or to receiving signals in beam line 10.

Beam line 10 is contained within a reserved volume or conduit 22 in an enclosure, such as a cylinder or pipe The beam line 10 being contained in a conduit, then the interior surface may be optically absorptive or optically reflective depending upon the length of the pipe, the wavelength of the signal generated by the laser within transmitter 12 and loss budget to provide optimal reception of optically encoded signal by the plurality of receiving probes 18 throughout the length of beam line 10.

Conduit 22 includes, in this exemplary embodiment, a first terminal unit 24 comprising a hub 11 and a second terminal unit 26. First terminal unit 24 originates free space beam line 10 and second terminal unit 26 terminates the portion of free space beam line 10 passing beyond the probes 18. As will be discussed further, below, first terminal unit 24 and/or second terminal unit 26 may include both transmitters and receivers, and may be also interconnected to recycle the encoded signal.

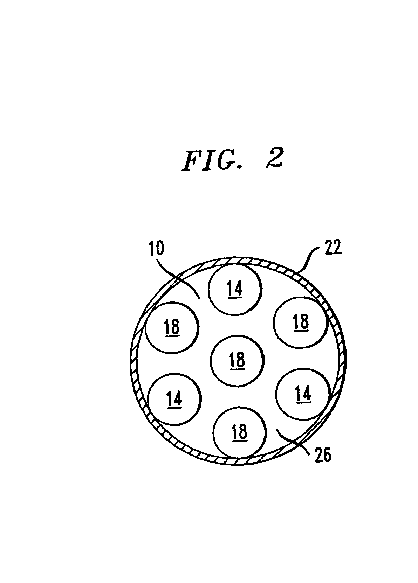

FIG. 2 illustrates a view looking down a cross-section of beam line 10 taken along line 2-2 of FIG. 1. Conduit 22 includes a plurality of transmitting probes 14 and receiving probes 18 around its inner edge. In the illustration of FIG. 2, the laser of hub 11 (Fig. 1) focuses beam line 10 to encompass the interior circumference of conduit 22 whereby each probe 18 receives the encoded optical signal. Second terminal unit 26 is illustrated herein as comprising a receiving probe 18. (Second terminal unit 26 may also include a transmitter 12, not shown.) Alternatively, second terminal unit 26 may comprise another hub or an end cap. An end cap may be absorptive in order to stop the beam line 10 or may be reflective (i.e., a mirror or retroreflector) to recycle beam line 10 in the opposite direction.

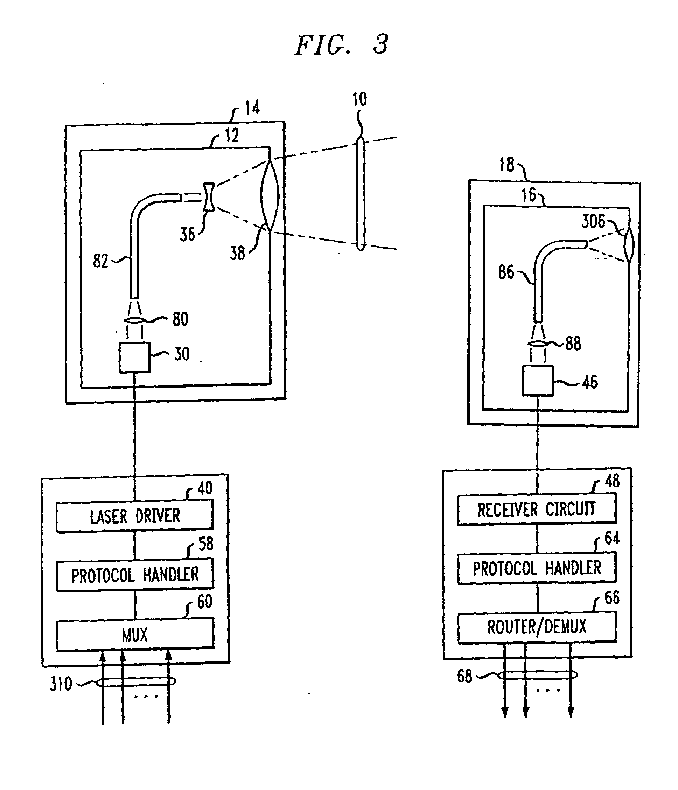

Turning now to FIG. 3, exemplary embodiments of a transmitting probe 14 and a receiving probe 18 configured for wavelength division multiplexing (WDM) of the bandwidth of a beam line are shown. Transmitting probe assembly 14 includes transmit electro-optical components 12, and the receiving probe assembly 18 includes receive electro-optical components 16. Light of a pre-specified, closely controlled wavelength is transmitted over free space beam line 10 from transmit probe 14 to effect communication between two processing units in the system.

Transmit electro-optical assembly 12 includes a laser 30 that operates at a controlled wavelength, a condensing lens 80, a fiber 82 to carry the light to the beam line and a diverging lens 36 and converging lens 38. Lenses 36 and 38 represent a reverse Galilean telescope that expands the small diverging beam from fiber 80 into a larger, less divergent beam, and directs it into free space beam line 10.

Laser driver 40 energizes laser 30. Laser driver 40 includes circuits to provide the correct bias current and modulation to laser 30, but also includes elements necessary to control and monitor the emission wavelength of laser 30, as known in the art. Feedback is maintained between laser 30 and laser driver 40 to establish servo loops needed to precisely control the emission power, emission wavelength, and temperature of laser 30. Protocol handler 58 provides a serial bitstream used by laser driver 40 to modulate laser 30. Mux 60 merges data from all the various sources of bearer, control and administrative information arriving on links 310, which are to be transmitted to other processing units.

Receive electro-optical assembly 16 includes a converging lens 306 to focus light from beam line 10 onto fiber 86. Fiber 86 carries the light from the beam line to wavelength selective photodetector 46. Lens 88 focus the light from fiber 86 to photodetector 46.

Wavelength selective photodetector 46 includes a tunable optical bandpass filter, as known in the art, to select a single wavelength from the plurality of wavelengths present in beam line 10 (and on fiber 86). This filtering function must be very selective, as the wavelength spacing may be very close. The photoreceiver element, (i.e., a photodiode in the preferred embodiment) contained in 46 must be illuminated by only a single wavelength to reliably receive information from a single subchannel.

Receiver circuit 48 includes all the circuits typical of known photoreceivers, including a transimpediance amplifier, clock recovery logic, and a decision circuit. In addition, receiver 48 includes elements needed to tune the wavelength selective filter contained in 46. Protocol handler 64 receives the serial stream and clock recovered in receiver circuit 48, and reassembles it into a data stream. This data stream (bearer, control and administrating data) is then sent to router/demux 66, which routes it to one of a plurality of possible destinations over links 68.

FIG. 4 is a block diagram of hub 11, which may be first terminal unit 24 and/or second terminal unit 26 (FIG. 1). Hub 11 must simultaneously terminate all wavelengths on the free space beam line in each direction. Beam line 10 enters hub electro-optical assembly 400 through focusing lens 405. Light from beam line 10 passes through dichoric beam splitter 410, which divides the optical energy passing through into two bands: a band of longer wavelengths that pass straight through the beam splitter 410, and a band of shorter wavelengths that turn 90 degrees. Channels from the processing units are in the longer wavelength band, so they pass straight through the beam splitter 410, and are directed onto fiber 420. Wavelengths being sent to the processing units are in the shorter band, and therefore emerge from fiber 422, turned 90 degrees by beam splitter 410, and are transmitted through lens 405 and onto beam line 10.

Erbium Doped Fiber Amplifier 424 boosts the amplitude of the receive optical signal, which passes through wavelength selective fiber splitter 428 and onto photoreceivers 432A - 432C, which contain photodiodes, transimpediance amplifiers, clock recovery circuits, and decision circuits, as known in the art. One photoreceiver is required per wavelength received at hub 11. Electrical signals from the photoreceivers then pass to router 435. Router 435 receives one electrical stream per wavelength from photoreceivers 432A - 432C, decodes their addresses, and routes them as electrical signals to the appropriate transmitter assembly 434A - 434C.

Transmitter assemblies 434A - 434C include laser drivers, laser diodes, and feedback circuits to stabilize the laser's power and wavelength, as known in the art. Each of the optical transmitter assemblies 434A - 434C operates on a specific wavelength, with one transmitter required per wavelength transmitted into the beam line 10. Optical signals from transmitter assemblies 434A - 434C are combined in coupler 430, boosted by Erbium Doped Fiber Amplifier 426, and sent through beamsplitter 410 and lens 405 onto beam line 10.

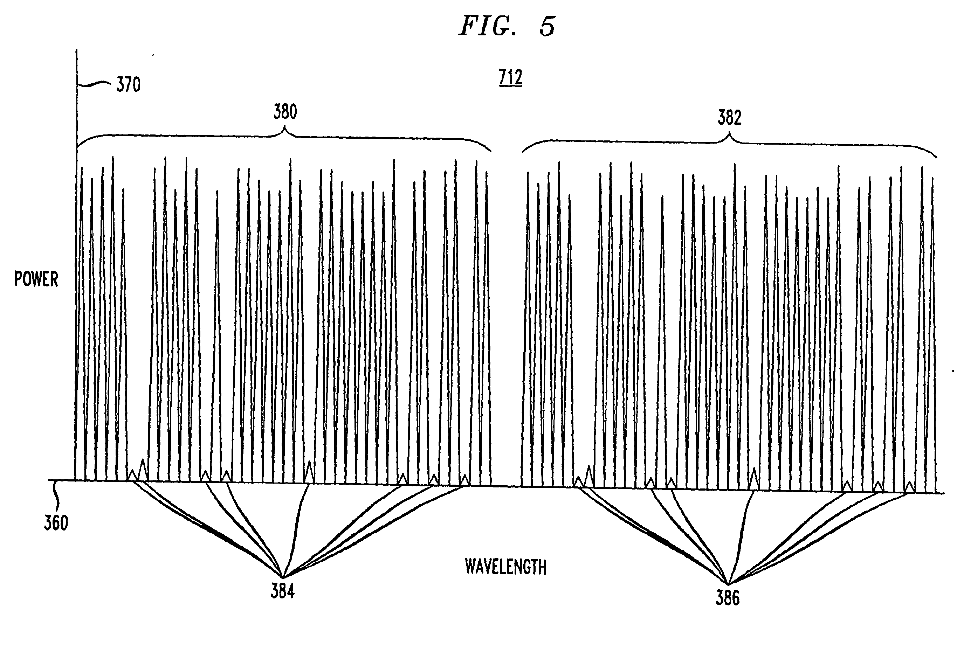

FIG. 5 represents a wavelength spectral plot of a WDM system according to an exemplary embodiment of this invention in operation. Eighty distinct wavelengths are used to interconnect 32 processing units in this exemplary embodiment. Each processing unit is assigned a single wavelength for transmission toward central hub 11, and a second wavelength over which hub 11 transmits messages back to the processing unit. Wavelengths used for transmission towards hub 11 are grouped in the longer wavelength spectrum, and wavelengths used to transmit from hub 11 back to the processing units occupy a group in the shorter wavelength spectrum.

This plot represents output from a spectrophotometer monitoring the entire light spectrum in free space beam line 10. The horizontal axis 360 represents the wavelength of the monitored light, and the vertical axis 370 represents the power monitored on each wavelength. The group of 32 longer wavelength peaks 380 is the set of subchannel signals from the processing units toward the hub 11. The group of shorter wavelength peaks 382 is the optical signal set from the hub to the individual processing units. Unused wavelengths 384 and 386 are spare; to be used for system expansion or in case a failure requires reconfiguration of the wavelength assignments. Unused wavelengths 384 and 386 could also be used to balance the load of the system. Each processing unit transmits and receives its primary traffic on its assigned wavelengths 380 and 382, but if the traffic load exceeded the capacity of these channels, spare wavelengths 384 and 386 can be allocated to supplement the channels that are in overflow. Using this overload control scheme necessitates each of the processing unit probes being able to transmit and receive on two or more wavelengths, its primarily assigned wavelength, and one or more supplemental wavelengths. The supplemental wavelengths can be a shared, managed free resource pool. Of course, as spare wavelengths 384 and 386 are activated, the amplitude of their peaks on FIG. 5 would increase.

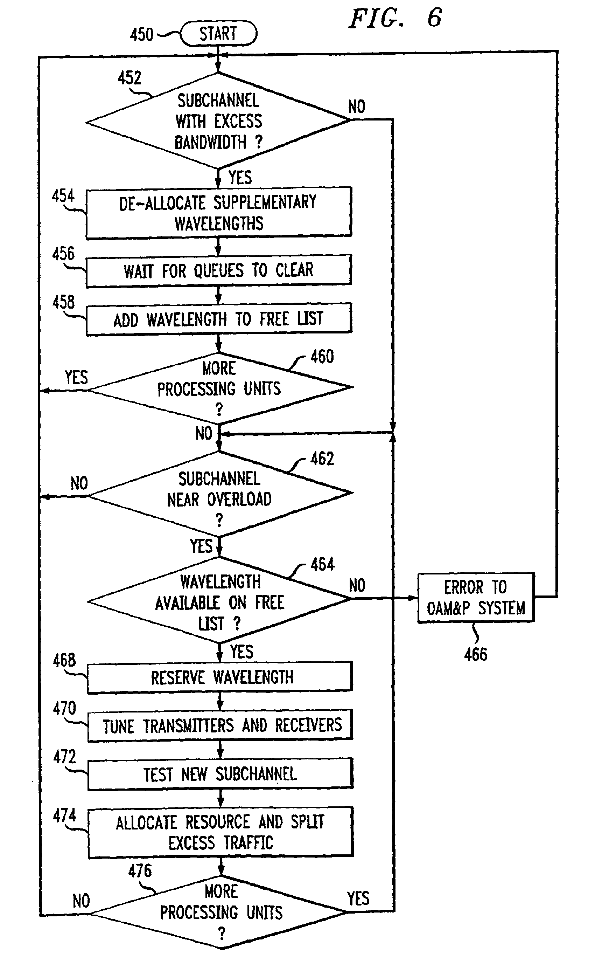

FIG. 6 is a flowchart for managing the dynamically allocated bandwidth available if more than one wavelength agile laser and photoreceiver is used at each processing unit. Dynamic bandwidth allocation operation starts at 450. In decision diamond 452, a determination is made if any of the processing units have excessive bandwidth allocations. This determination is made by polling all processing units with more than one wavelength assigned in each direction, and calculating whether the total load has fallen below 90% of the capacity of a single channel. If so, the supplementary wavelength channel is de-allocated from the processing unit in action box 454. Any traffic that may be queued for transmission is allowed to clear in action box 456. Processing proceeds to action box 458, where the newly freed wavelength is added to the free list. In decision diamond 460, a determination is made if there are any remaining processing units to check for excess bandwidth.

The determination of decision diamond 462 comprises determining if any subchannel is approaching overload. Each processing unit is polled to determine if its transmit queue is over 90% full. If so, decision diamond 564 determines if a supplementary wavelength is available to take the added traffic. If not, a system overload error is sent to the Operations Administration, Maintenance and Provisioning system in action box 466. If a supplementary wavelength is available, a wavelength is reserved in action box 468. The lasers and photoreceivers associated with both transmitters and both receivers are programmed to tune their wavelengths in action box 470. Tests are performed in action box 472 to detennine if the new channels are performing correctly. In action box 474, the wavelength is allocated, and traffic begins to flow to relieve the overloaded primary wavelength. Decision diamond 478 tests to see if other processing units are in overload. The entire bandwidth management loop repeats infinitely as long as the system operates.

## Claims

1. A method for optically interconnecting a plurality of processing units via wavelength division multiplexing and the use of at least one hub (24, 26, 400), whereby messages for said plurality of processing units are optically encoded onto multiple individual sub-channels each having a different wavelength and are communicated among said processing units via said hub, the method comprising:
providing the multiple individual channels over a shared free space optical beamline (10), the beamline being contained entirely within a conduit (22), extending communications among said processing units, and terminating at said at least one hub (24, 26, 400);
associating with each of said processing units a transmit probe (14) and a receive probe (18), the transmit and receive probes of the different processing units being disposed in a helical arrangement along said beamline within the conduit;
assigning to the transmit probe and to the receive probe of each processing unit a different first sub-channel of a different first wavelength belonging to a first group of sub-channels of a first group of wavelengths, reserved to transmit,messages from the processing units towards the hub, and a different second sub-channel of a different second wavelength belonging to a second group of sub-channels of a second group of wavelengths different from the first group of wavelengths, reserved transmit messages from the hub towards the processing units, respectively, said transmit and receive probe of each processing unit being intended to be operated at said different first and said different second wavelength of the corresponding first and second sub-channels assigned thereto;
transmitting by the transmit probe of each processing unit towards the hub, over its assigned sub-channel of the corresponding first wavelength of the first group, a message destined to another processing unit, yielding a plurality of messages transmitted towards said hub over the different sub-channels of the first group;
receiving said plurality of messages within the hub;
transforming within the hub said different first wavelength of each of said receive messages into that different second wavelength of the second group which is assigned to said another processing unit to which the corresponding message is destined;
retransmitting by said hub towards the processing units said plurality of wavelength-transformed messages; and
receiving by the receive probe of each processing unit the message and the corresponding second wavelength to which it is destined.

2. The method of claim 1 further comprising allocating, for each of the plurality of processing units, one or more sub-channels selected from the first group and one or more sub-channels selected from the second group.

3. The method of claim 2 wherein the step of allocating comprises dynamically allocating sub-channels from the first and second groups according to load conditions.

4. The method of claim 3 wherein the step of allocating comprises:
allocating, to each individual processing unit, a first transmit channel selected from the first group and a first receive channel selected from the second group;
allocating a second transmit channel from the first group if a transmit queue associated with the first transmit channel of a processing unit exceeds a threshold; and
allocating a second receive channel from the second group if a receive queue associated with the first receive channel of a processing unit exceeds a threshold.

5. The method of claim 4 further comprising:
de-allocating the second transmit channel associated with a processing unit if a total transmit load of the processing unit falls below the threshold of a single channel; and
de-allocating the second receive channel associated with a processing unit if a total receive load of the processing unit falls below the threshold of a single channel.

6. A communication system comprising a plurality of processing units as well as means (14, 18, 22, 24, 26, 400) for optically interconnecting said processing units via wavelength division multiplexing and the use of at least one hub (24, 26, 400), whereby messages are optically encoded onto multiple individual sub-channels each having a different wavelength and are communicated among said processing units via said hub, said optically interconnecting means comprising:
said at least one hub;
a conduit (22), extending along said processing units and terminating at said hub, for containing entirely therewithin a shared free space optics beam line (10) over which the multiple individual channels on different wavelength are provided;
a transmit probe (14) and a receive probe (18) associated with each of said processing units, the transmit and receive probes of the different processing units being disposed in a helical arrangement along said beamline within the conduit; wherein:
- the transmit probe of the processing unit is configured to be operated at a different first wavelength belonging to a first group of wavelengths and to have assigned thereto a different first sub-channel of said corresponding first wavelength belonging to a first group of sub-channels of said first group of wavelengths, so as to be able to generate and transmit toward said hub, over its assigned sub-channel of the corresponding first wavelength of the first group of wavelengths, a message destined to another processing unit, yielding a plurality of messages transmitted towards said hub over the different sub-channels of the first group; and
- the receive probe of each processing unit Is configured to be operated at a different second wavelength belonging to a second group of second wavelengths different from the first wavelengths and to have assigned thereto a different second sub-channel of said corresponding second wavelength belonging to a second group of sub-channels of said second group of wavelengths, so as to be able to receive from the hub, over its assigned sub-channel of the corresponding second wavelength of the second group of second wavelengths, the message which is destined to it; and
means, within said hub, for receiving said plurality of transmitted messages, for transforming said different first wavelength of each of said receive messages into that different second wavelength of the second group which is assigned to the receive probe of said another processing unit to which the corresponding message is destined, and for retransmitting towards the processing units said plurality of wavelength-transformed messages, whereby each of said messages retransmitted at a different second wavelength is intended to be received by the receive probe of the corresponding processing unit to which said message is destined.

7. The communication system according to claim 6 further including means for dynamic wavelength allocation and de-allocation responsive to system load.

## Revendications

1. Procédé d'interconnexion optique d'une pluralité d'unités de traitement par multiplexage par répartition en longueur d'onde et l'utilisation d'au moins un concentrateur (24, 26, 400), par lequel des messages destinés à ladite pluralité d'unités de traitement sont codés optiquement sur de multiples sous-canaux individuels ayant chacun une longueur d'onde différente et sont communiqués entre lesdites unités de traitement par l'intermédiaire dudit concentrateur, le procédé comprenant :
la fourniture des canaux individuels multiples sur une raie de faisceau optique partagée dans l'espace libre (10), la raie de faisceau étant contenue entièrement dans un conduit (22), acheminant des communications entre lesdites unités de traitement, et se terminant au niveau dudit au moins un concentrateur (24, 26, 400) ;
associée à chacune desdites unités de traitement une sonde d'émission (14) et une sonde de réception (18), les sondes d'émission et de réception des différentes unités de traitement étant disposées en un agencement hélicoïdal le long de ladite raie optique dans le conduit ;
l'attribution à la sonde d'émission et à la sonde de réception de chaque unité de traitement d'un premier sous-canal différent d'une première longueur d'onde différente appartenant à un premier groupe de sous-canaux d'un premier groupe de longueurs d'onde, réservé à la transmission de messages depuis les unités de traitement vers le concentrateur, et d'un deuxième sous-canal différent d'une deuxième longueur d'onde différente appartenant à un deuxième groupe de sous-canaux d'un deuxième groupe de longueurs d'onde différent du premier groupe de longueurs d'onde, réservé à la transmission de messages depuis le concentrateur vers les unités de traitement, respectivement, lesdites sondes d'émission et de réception de chaque unité de traitement étant destinées à fonctionner à ladite première longueur d'onde différente et à ladite deuxième longueur d'onde différente des premier et deuxième sous-canaux correspondants attribués à celles-ci ;
la transmission par la sonde d'émission de chaque unité de traitement vers le concentrateur, sur son sous-canal attribué de la première longueur d'onde correspondante du premier groupe, d'un message destiné à une autre unité de traitement, produisant une pluralité de messages transmis vers ledit concentrateur sur les différents sous-canaux du premier groupe ;
la réception de ladite pluralité de messages dans le concentrateur ;
la transformation dans le concentrateur de ladite première longueur d'onde différente de chacun desdites messages reçus en la deuxième longueur d'onde différente du deuxième groupe qui est attribuée à ladite autre unité de traitement à laquelle le message correspondant est destiné ;
la retransmission par ledit concentrateur vers les unités de traitement de ladite pluralité de messages à longueur d'onde transformée ; et
la réception par la sonde de réception de chaque unité de traitement du message et de la deuxième longueur d'onde correspondante à laquelle elle est destinée.

2. Procédé selon la revendication 1, comprenant en outre l'attribution, pour chacune de la pluralité d'unités de traitement, d'un ou de plusieurs sous-canaux sélectionnés dans le premier groupe et d'un ou de plusieurs sous-canaux sélectionnés dans le deuxième groupe.

3. Procédé selon la revendication 2, dans lequel l'étape d'attribution comprend l'attribution dynamique de sous-canaux des premier et deuxième groupes conformément à des conditions de charge.

4. Procédé selon la revendication 3, dans lequel l'étape d'attribution comprend :
l'attribution, à chaque unité de traitement individuelle, d'un premier canal d'émission sélectionné dans le premier groupe et d'un premier canal de réception sélectionné dans le deuxième groupe ;
l'attribution d'un deuxième canal d'émission du premier groupe si une file d'attente d'émission associée au premier canal d'émission d'une unité de traitement dépasse un seuil ; et
l'attribution d'un deuxième canal de réception du deuxième groupe si une file d'attente de réception associée au premier canal de réception d'une unité de traitement dépasse un seuil.

5. Procédé selon la revendication 4, comprenant en outre :
la désattribution du deuxième canal d'émission associé à une unité de traitement si une charge d'émission totale de l'unité de traitement chute en dessous du seuil d'un canal unique ; et
la désattribution du deuxième canal de réception associé à une unité de traitement si une charge de réception totale de l'unité de traitement chute en dessous du seuil d'un canal unique.

6. Système de communication comprenant une pluralité d'unités de traitement ainsi que de moyens (14, 18, 22, 24, 26, 400) pour interconnecter optiquement lesdites unités de traitement par multiplexage par répartition en longueur d'onde et l'utilisation d'au moins un concentrateur (24, 26, 400), par lequel des messages sont codés optiquement sur de multiples sous-canaux individuels ayant chacun une longueur d'onde différente et sont communiqués entre lesdites unités de traitement par l'intermédiaire dudit concentrateur, lesdits moyens d'interconnexion optique comprenant :
ledit au moins un concentrateur ;
un conduit (22), s'étendant le long desdites unités de traitement et se terminant au niveau dudit concentrateur, pour renfermer entièrement en son sein une raie de faisceau optique partagée dans l'espace libre (10) sur laquelle les multiples canaux individuels de différentes longueurs d'onde sont fournis ;
une sonde d'émission (14) et une sonde de réception (18) associées à chacune desdites unités de traitement, les sondes d'émission et de réception des différentes unités de traitement étant disposées en un agencement hélicoïdal le long de ladite raie de faisceau dans le conduit ; dans lequel :
- la sonde d'émission de l'unité de traitement est configurée pour être actionnée à une première longueur d'onde différente appartenant à un premier groupe de longueurs d'onde et pour que lui soit attribué un premier sous-canal différent de ladite première longueur d'onde correspondante appartenant à un premier groupe de sous-canaux dudit premier groupe de longueurs d'onde, de façon à pouvoir générer et transmettre vers ledit concentrateur, sur ledit sous-canal attribué de la première longueur d'onde correspondante du premier groupe de longueurs d'onde, un message destiné à une autre unité de traitement, produisant une pluralité de messages transmis vers ledit concentrateur sur les différents sous-canaux du premier groupe ; et
- la sonde de réception de l'unité de traitement est configurée pour être actionnée à une deuxième longueur d'onde différente appartenant à un deuxième groupe de longueurs d'onde différentes des premières longueurs d'onde et pour que lui soit attribué un deuxième sous-canal différent de ladite deuxième longueur d'onde correspondante appartenant à un deuxième groupe de sous-canaux dudit deuxième groupe de longueurs d'onde, de façon à pouvoir recevoir dudit concentrateur, sur son sous-canal attribué de la deuxième longueur d'onde correspondante du deuxième groupe de longueurs d'onde, le message qui lui est destiné et ;
un moyen, dans ledit concentrateur, pour recevoir ladite pluralité de messages transmis, pour transformer ladite première longueur d'onde différente de chacun desdites messages reçus en la deuxième longueur d'onde différente du deuxième groupe qui est attribuée à la sonde de réception de ladite autre unité de traitement à laquelle le message correspondant est destiné, et pour retransmettre vers les unités de traitement ladite pluralité de messages à longueur d'onde transformée, par lequel chacun desdits messages retransmis à une deuxième longueur d'onde différente est destiné à être reçu par la sonde de réception de l'unité de traitement correspondante à laquelle ledit message est destiné.

7. Système de communication selon la revendication 6, comportant en outre un moyen d'attribution et de désattribution dynamiques de longueurs d'onde en réponse à une charge de système.

## Patentansprüche

1. Verfahren zum optischen Verbinden einer Vielzahl von Verarbeitungseinheiten durch Wellenlängenmultiplexen und Verwendung mindestens eines Verteilers (24, 26, 400), wodurch Nachrichten für die Vielzahl von Verarbeitungseinheiten optisch auf mehrere einzelne Subkanäle aufmoduliert werden, die alle unterschiedliche Wellenlängen aufweisen und über den Verteiler zwischen den Verarbeitungseinheiten übermittelt werden, wobei das Verfahren die folgenden Schritte umfaßt:
Bereitstellen der mehreren einzelnen Kanäle über eine gemeinsam benutzte optische Freiraum-Beamline (10), wobei die Beamline vollständig in einem Durchgang (22) enthalten ist, wodurch die Kommunikation zwischen den Verarbeitungseinheiten erweitert wird, und Abschließen des mindestens einen Verteilers (24, 26, 400);
Assoziieren einer Sendesonde (14) und einer Empfangssonde (18) mit jeder der Verarbeitungseinheiten, wobei die Sende- und die Empfangssonde der verschiedenen Verarbeitungseinheiten in einer helixförmigen Anordnung entlang der Beamline in dem Durchgang angeordnet sind;
Zuweisen eines unterschiedlichen ersten Subkanals einer unterschiedlichen Wellenlänge, die zu einer ersten Gruppe von Subkanälen einer ersten Gruppe von Wellenlängen gehören, die für das Senden von Nachrichten von den Verarbeitungseinheiten in Richtung des Verteilers reserviert sind, bzw. eines unterschiedlichen zweiten Subkanals einer unterschiedlichen zweiten Wellenlänge, die zu einer zweiten Gruppe von Subkanälen einer von der ersten Gruppe von Wellenlängen verschiedenen zweiten Gruppe von Wellenlängen gehören, die für das Senden von Nachrichten von dem Verteiler in Richtung der Verarbeitungseinheiten reserviert sind, zu der Sendesonde und der Empfangssonde jeder Verarbeitungseinheit, wobei die Sendesonde und die Empfangssonde jeder Verarbeitungseinheit für einen Betrieb mit der unterschiedlichen ersten und der unterschiedlichen zweiten Wellenlänge der entsprechenden, diesen zugewiesenen ersten und zweiten Subkanäle bestimmt sind;
Senden, durch die Sendesonde jeder Verarbeitungseinheit in Richtung des Verteilers über seinen zugewiesenen Subkanal der entsprechenden ersten Wellenlänge der ersten Gruppe, einer Nachricht, die für eine andere Verarbeitungseinheit bestimmt ist, wodurch sich eine Vielzahl von Nachrichten ergibt, die über die unterschiedlichen Subkanäle der ersten Gruppe in Richtung des Verteilers gesendet werden;
Empfangen der Vielzahl von Nachrichten in dem Verteiler;
Transformieren der unterschiedlichen ersten Wellenlänge jeder der Empfangsnachrichten in die unterschiedliche zweite Wellenlänge der zweiten Gruppe, die der anderen Verarbeitungseinheit zugewiesen ist, für die die entsprechende Nachricht bestimmt ist, in dem Verteiler;
Weitersenden der Vielzahl von wellenlängentransformierten Nachrichten in Richtung der Verarbeitungseinheiten durch den Verteiler; und
Empfangen der Nachricht und der entsprechenden zweiten Wellenlänge, wofür sie bestimmt ist, durch die Empfangssonde jeder Verarbeitungseinheit.

2. Verfahren nach Anspruch 1, ferner mit dem Schritt des Zuteilens, für jede der Vielzahl von Verarbeitungseinheiten, eines oder mehrerer aus der ersten Gruppe ausgewählter Subkanäle oder eines oder mehrerer aus der zweiten Gruppe ausgewählter Subkanäle.

3. Verfahren nach Anspruch 2, wobei der Schritt des Zuteilens ein dynamisches Zuteilen von Subkanälen aus der ersten und der zweiten Gruppe gemäß Lastbedingungen umfaßt.

4. Verfahren nach Anspruch 3, wobei der Schritt des Zuteilens folgendes umfaßt:
Zuteilen eines aus der ersten Gruppe ausgewählten ersten Sendekanals und eines aus der zweiten Gruppe ausgewählten ersten Empfangskanals zu jeder einzelnen Verarbeitungseinheit;
Zuteilen eines zweiten Sendekanals aus der ersten Gruppe, wenn eine mit dem ersten Sendekanal einer Verarbeitungseinheit assoziierte Sendewarteschlange eine Schwelle übersteigt; und
Zuteilen eines zweiten Empfangskanals aus der zweiten Gruppe, wenn eine mit dem ersten Empfangskanal einer Verarbeitungseinheit assoziierte Empfangswarteschlange eine Schwelle übersteigt.

5. Verfahren nach Anspruch 4, ferner mit den folgenden Schritten:
Aufheben der Zuteilung des mit einer Verarbeitungseinheit assoziierten zweiten Sendekanals, wenn eine Gesamtsendelast der Verarbeitungseinheit unter die Schwelle eines einzelnen Kanals abfällt; und
Aufheben der Zuteilung des mit einer Verarbeitungseinheit assoziierten zweiten Empfangskanals, wenn eine Gesamtempfangslast der Verarbeitungseinheit unter die Schwelle eines einzelnen Kanals abfällt.

6. Kommunikationssystem mit einer Vielzahl von Verarbeitungseinheiten sowie Mitteln (14, 18, 22, 24, 26, 400) zum optischen Verbinden der Verarbeitungseinheiten durch Wellenlängenmultiplexen und Verwendung mindestens eines Verteilers (24, 26, 400), wodurch Nachrichten optisch auf mehrere einzelne Subkanäle aufmoduliert werden, die alle unterschiedliche Wellenlängen aufweisen und über den Verteiler zwischen den Verarbeitungseinheiten übermittelt werden, wobei die Mittel zum optischen Verbinden folgendes umfassen:
den mindestens einen Verteiler;
einen Durchgang (22), der sich entlang den Verarbeitungseinheiten erstreckt und an dem Verteiler endet, zum vollständigen Enthalten einer gemeinsam benutzten optischen Freiraum-Beamline (10) darin, über die die mehreren einzelnen Kanäle auf unterschiedlicher Wellenlänge bereitgestellt werden;
eine mit jeder der Verarbeitungseinheiten assoziierte Sendesonde (14) und Empfangssonde (18), wobei die Sende- und die Empfangssonde der verschiedenen Verarbeitungseinheiten in einer helixförmigen Anordnung entlang der Beamline in dem Durchgang angeordnet sind; wobei
die Sendesonde der Verarbeitungseinheit für einen Betrieb mit einer zu einer ersten Gruppe von Wellenlängen gehörender unterschiedlichen ersten Wellenlänge ausgelegt ist und ihr ein zu einer ersten Gruppe von Subkanälen der ersten Gruppe von Wellenlängen gehörender unterschiedlicher erster Subkanal der entsprechenden ersten Wellenlänge zugewiesen ist, um so in der Lage zu sein, eine Nachricht, die für eine andere Verarbeitungseinheit bestimmt ist, zu erzeugen und in Richtung des Verteilers zu senden, wodurch sich eine Vielzahl von Nachrichten ergibt, die über die unterschiedlichen Subkanäle der ersten Gruppe in Richtung des Verteilers gesendet werden; und
die Empfangssonde jeder Verarbeitungseinheit für einen Betrieb mit einer zu einer zweiten Gruppe von Wellenlängen gehörender unterschiedlichen zweiten Wellenlänge ausgelegt ist und ihr ein zu einer zweiten Gruppe von Subkanälen der zweiten Gruppe von Wellenlängen gehörender unterschiedlicher zweiter Subkanal der entsprechenden zweiten Wellenlänge zugewiesen ist, um so in der Lage zu sein, von dem Verteiler über ihren zugewiesenen Subkanal der entsprechenden zweiten Wellenlänge der zweiten Gruppe von Wellenlängen die für sie bestimmte Nachricht zu empfangen; und
Mittel in dem Verteiler zum Empfangen der Vielzahl von gesendeten Nachrichten, zum Transformieren der unterschiedlichen ersten Wellenlänge jeder der Empfangsnachrichten in die unterschiedliche zweite Wellenlänge der zweiten Gruppe, die der Empfangssonde der anderen Verarbeitungseinheit zugewiesen ist, für die die entsprechende Nachricht bestimmt ist, und zum Weitersenden der Vielzahl von wellenlängentransformierten Nachrichten in Richtung der Verarbeitungseinheiten, wodurch jede der mit einer unterschiedlichen zweiten Wellenlänge weitergesendeten Nachrichten durch die Empfangssonde der entsprechenden verarbeitungseinheit, für die die Nachricht bestimmt ist, empfangen werden soll.

7. Kommunikationssystem nach Anspruch 6, ferner mit Mitteln für dynamische Wellenlängenzuteilung bzw. Aufhebung der Zuteilung als Reaktion auf Systemlast.
